# EUROPEAN PATENT APPLICATION

(11) **EP 3 731 388 A1**
(43) Date of publication of application: **28.10.2020**
(21) Application number: 20150231.7
(22) Date of filing: 03.01.2020
(51) Int. Cl.: H02K 29/03

(54) **SINGLE-PHASE PERMANENT MAGNET BRUSHLESS DIRECT-CURRENT MOTOR**

(30) Priority: 23.04.2019 CN 201910330515
(71) Applicant: Hangzhou Kangbei Motor Co., Ltd., Hangzhou Zhejiang 311121 (CN)
(72) Inventor: CHEN, Jingtao, Hangzhou, Zhejiang 311121 (CN); XU, Haibo, Hangzhou, Zhejiang 311121 (CN); CHEN, Litao, Hangzhou, Zhejiang 311121 (CN); CHENG, Jiuxin, Hangzhou, Zhejiang 311121 (CN)
(74) Representative: Pons

(57) **Abstract**

The present invention discloses a main motor of a single-phase permanent magnet brushless direct-current motor, which includes a multipole columnar permanent magnet rotor and a stator having corresponding poles, where a uniform air gap structure is arranged between the permanent magnet rotor and the stator. An output shaft of the motor is coaxially fixed to the center of the columnar permanent magnet rotor; the stator includes a stator core, stator windings and a frame, the stator core has corresponding stator poles and a stator yoke, the stator yoke is circular ring-shaped, the stator poles are uniformly distributed on an inner circumference of the stator yoke in a circumferential direction, the stator windings are wound around the stator poles, The present invention reduces magnetic reluctance while achieving single-phase self starting, reduces vibration and noise generated by torque fluctuation and remarkably improves operation efficiency of the motor.

## Description

### TECHNICAL FIELD

The present invention relates to the technical field of brushless direct-current motors, and in particular, to a main motor of a single-phase permanent magnet brushless direct-current motor.

### BACKGROUND

A cooling and ventilating fan on an evaporator and a condenser in a cooling system adopts the traditional shaded-pole motor. A main motor of the shaded-pole motor has a simple structure and is convenient to achieve mass production, but the structure efficiency is ultra low, and currently, the shaded-pole motor is gradually replaced by a single-phase permanent magnet brushless direct-current motor.

A structure of a main motor of the single-phase permanent magnet brushless direct-current motor is similar to the structure of the main motor of the shaded-pole motor, but a copper shading coil is designed on one side of a pole piece of a stator pole in the main motor of the shaded-pole motor and is also called a shaded pole, which is the origin of the name of the shaded-pole motor. However, the main motor of the single-phase permanent magnet brushless direct-current motor is not provided with the shading coil. A rotor of the main motor of the shaded-pole motor adopts a core cast aluminum squirrel cage structure, a rotor of the main motor of the single-phase permanent magnet brushless direct-current motor adopts a permanent magnet structure having magnetic poles, but they configure a nonuniform air gap structure arrangement between the pole piece of the stator pole and the rotor.

To obtain a single-phase self-starting torque, the main motor of the single-phase permanent magnet brushless direct-current motor adopts the nonuniform air gap structure arrangement like the main motor of the shaded-pole motor, which is a simple and effective design solution. However, if such solution is adopted, an air gap between the pole piece of the stator pole and a permanent magnet rotor is inevitably increased, and a nonuniform air gap is inevitably accompanying with operation torque fluctuation so as to increase vibration and noise, which is undesirable to utilization rate of the permanent magnet rotor.

### SUMMARY

An objective of the present invention is to provide a main motor of a single-phase permanent magnet brushless direct-current motor to overcome the above technical problems of a nonuniform air gap structure, reduce magnetic reluctance while achieving single-phase self starting, and reduce vibration and noise generated by torque fluctuation.

To achieve the above purpose, the present invention provides the following technical solution.

A main motor of a single-phase permanent magnet brushless direct-current motor includes:
a permanent magnet rotor, wherein the permanent magnet rotor has a multipole columnar structure, and an output shaft of the motor is coaxially fixed to the center of the permanent magnet rotor; and
a stator, where the stator comprises a stator core, stator windings and a frame, the stator core has corresponding stator poles and a stator yoke, the stator yoke is circular ring-shaped, the stator poles are uniformly distributed on an inner circumference of the stator yoke in a circumferential direction, the stator windings are wound around the stator poles, one end, close to the permanent magnet rotor, of the stator pole has a pole piece structure, an air gap between the pole piece and the permanent magnet rotor is uniform, an outer circumference of the stator core is fixed to the frame, a notch is formed in one side, away from the permanent magnet rotor, of the pole piece, and the notch of each pole piece is located on the same side of the stator pole corresponding to the pole piece.

Preferably, through grooves are formed in the outer circumference of the stator yoke and extend in an axial direction, the four through grooves are uniformly distributed in a circumferential direction of the stator yoke, four bumps are arranged on an inner side of the frame and extend in an axial direction of the frame, and the bumps are inserted into the through grooves.

Preferably, a mark groove is arranged on the outer circumference of the stator yoke, and the mark groove and one of the through grooves are adjacently arranged in parallel.

Compared with the prior art, the present invention achieves the following technical effects:
in the present invention, an air gap between a pole piece and a permanent magnet rotor is uniform, so the present invention achieves self starting in a manner of arranging notchs in one side, away from the permanent magnet rotor, of the pole shoe rather than through a nonuniform air gap structure, and by adopting a uniform air gap structure, the present invention eliminates problems of increased magnetic reluctance and torque fluctuation of a nonuniform air gap, reduces the magnetic reluctance while achieving single-phase self starting, reduces vibration and noise generated by the torque fluctuation, and remarkably improves operation efficiency.

### BRIEF DESCRIPTION OF THE DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram showing a partial structure of a main motor of a single-phase permanent magnet brushless direct-current motor of an embodiment.
FIG. 2 is a schematic diagram showing a position relationship between a stator and a permanent magnet rotor of an embodiment.
FIG. 3 is a schematic diagram showing a position relationship between a stator and a permanent magnet rotor of a single-phase permanent magnet brushless direct-current motor in the prior art.

In the drawings: 1-permanent magnet rotor, 2-output shaft, 3-stator pole, 4-stator yoke, 5-pole piece, 6-notch, 7-through groove and 8-mark groove.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An objective of the present invention is to provide a main motor of a single-phase permanent magnet brushless direct-current motor to overcome the above technical problems of a nonuniform air gap structure, reduce magnetic reluctance while achieving single-phase self starting, and reduce vibration and noise generated by torque fluctuation.

To make the foregoing objective, features, and advantages of the present invention clearer and more comprehensible, the present invention is further described in detail below with reference to the accompanying drawings and specific embodiments.

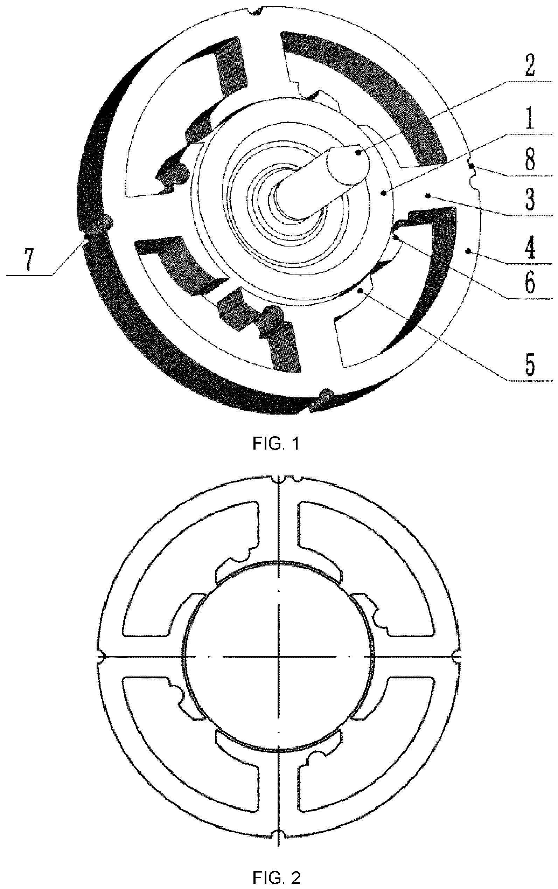

As shown in FIG. 1 and FIG. 2, an embodiment provides a main motor of a single-phase permanent magnet brushless direct-current motor of an embodiment, which includes a permanent magnet rotor 1 and a stator.

Where the permanent magnet rotor 1 has a multipole columnar structure, an output shaft 2 of the motor is coaxially fixed to the center of the permanent magnet rotor 1, and when the permanent magnet rotor 1 rotates, a power is outputted outwards through the output shaft 2. The stator includes a stator core, stator windings and a frame, an outer circumference of the stator core is fixed to the frame, and the stator core has corresponding stator poles 3 and a stator yoke 4. The stator yoke 4 is circular ring-shaped, the four stator poles 3 are uniformly distributed on an inner circumference of the stator yoke 4 in a circumferential direction, and the stator windings are wound around the stator poles 3. One end, close to the permanent magnet rotor 1, of the stator pole 3 has a pole piece 5 structure, a notch 6 is formed in one side, away from the permanent magnet rotor 1, of the pole piece 5, and the notch 6 of each pole piece 5 is located on the same side of a stator pole 3 corresponding to the pole piece 5.

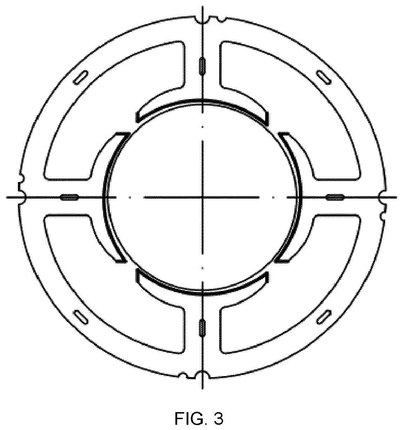

As shown in FIG. 3, in the main motor of a single-phase permanent magnet brushless direct-current motor in the prior art, a nonuniform air gap structure is arranged between its permanent magnet rotor 1 and the stator to achieve self starting after power on. However, the self starting cannot be achieved after power on if a uniform air gap structure is utilized. As shown in FIG. 1 and FIG. 2, in the embodiment, an air gap between the pole piece 5 and the permanent magnet rotor is uniform, but in a manner of providing the notch 6 in the pole piece 5, the embodiment achieves the self starting, simultaneously eliminates problems of increased magnetic reluctance and torque fluctuation of a nonuniform air gap, reduces the magnetic reluctance, reduces vibration and noise generated by the torque fluctuation, and remarkably improves operation efficiency.

A mounting manner of the stator and the frame can be selected by those skilled in the art according to practical requirements. In the embodiment, through grooves 7 are formed in the outer circumference of the stator yoke 4 and extend in an axial direction, the four through grooves 7 are uniformly distributed in a circumferential direction of the stator yoke 4, four bumps are arranged on an inner side of the frame and extend in an axial direction of the frame, and the bumps are inserted into the through grooves 7 so as to achieve circumferential location of the stator and the frame.

Furthermore, a mark groove 8 is arranged on the outer circumference of the stator yoke 4 of the embodiment, and the mark groove 8 and one of the through grooves 7 are adjacently arranged in parallel. Arrangement of the mark groove 8 is convenient to distinguish the stator poles 3 and determine a relative position of the stator and the frame in the circumferential direction.

Several examples are used for illustration of the principles and implementation methods of the specification. The description of the embodiments is used to help illustrate the method and its core principles of the present invention. In addition, those skilled in the art can make various modifications in terms of specific embodiments and scope of application in accordance with the teachings of the present invention. In conclusion, the content of this specification shall not be construed as a limitation to the present invention.

## Claims

1. A main motor of a single-phase permanent magnet brushless direct-current motor, comprising:
a permanent magnet rotor, wherein the permanent magnet rotor has a multipole columnar structure, and an output shaft of the motor is coaxially fixed to the center of the permanent magnet rotor; and
a stator, wherein the stator comprises a stator core, stator windings and a frame, the stator core has corresponding stator poles and a stator yoke, the stator yoke is circular ring-shaped, the stator poles are uniformly distributed on an inner circumference of the stator yoke in a circumferential direction, the stator windings are wound around the stator poles, one end, close to the permanent magnet rotor, of the stator pole has a pole piece structure, an air gap between the pole piece and the permanent magnet rotor is uniform, an outer circumference of the stator core is fixed to the frame, a notch is formed in one side, away from the permanent magnet rotor, of the pole piece, and the notch of each pole piece is located on the same side of the stator pole corresponding to the pole piece.

2. The main motor of a single-phase permanent magnet brushless direct-current motor according to claim 1, wherein through grooves are formed in the outer circumference of the stator yoke and extend in an axial direction, the four through grooves are uniformly distributed in a circumferential direction of the stator yoke, four bumps are arranged on an inner side of the frame and extend in an axial direction of the frame, and the bumps are inserted into the through grooves.

3. The main motor of a single-phase permanent magnet brushless direct-current motor according to claim 2, wherein a mark groove is arranged on the outer circumference of the stator yoke, and the mark groove and one of the through grooves are adjacently arranged in parallel.
